# EUROPÄISCHE PATENTANMELDUNG

(11) **EP 3 012 653 A1**
(43) Veröffentlichungstag der Anmeldung: **27.04.2016**
(21) Anmeldenummer: 15190480.2
(22) Anmeldetag: 20.10.2015
(51) Int. Cl.: G01S 7/521, G01S 15/93, G10K 9/22, G10K 11/00

(54) **ULTRASCHALLSENSORVORRICHTUNG FÜR EIN KRAFTFAHRZEUG, ANORDNUNG SOWIE KRAFTFAHRZEUG**

(30) Priorität: 21.10.2014 DE 102014115332
(71) Anmelder: Valeo Schalter und Sensoren GmbH, 74321 Bietigheim-Bissingen (DE)
(72) Erfinder: Triebl, Stefan, 74321 Bietigheim-Bissingen (DE); Wehling, Hans-Wilhelm, 74321 Bietigheim-Bissingen (DE); Hamm, Wolfgang, 74321 Bietigheim-Bissingen (DE)

(57) **Zusammenfassung**

Die Erfindung betrifft eine Ultraschallsensorvorrichtung (1) für ein Kraftfahrzeug, wobei die Ultraschallsensorvorrichtung (1) zur Anordnung in einer Öffnung eines Verkleidungsteils des Kraftfahrzeugs ausgelegt ist, mit einem Ultraschallsensor (2) zum Aussenden und/oder Empfangen eines Ultraschallsignals und mit einem Halteelement (6) zum Halten des Ultraschallsensors (2), wobei die Ultraschallsensorvorrichtung (1) ein Dämpfungselement (7) zum Dämpfen einer in Folge des Ultraschallsignals erzeugten Schwingung aufweist, welches zumindest bereichsweise an dem Halteelement (6) angeordnet ist und welches zumindest teilsweise aus einem Butylkautschuk besteht.

## Beschreibung

Die vorliegende Erfindung betrifft eine Ultraschallsensorvorrichtung für ein Kraftfahrzeug, wobei die Ultraschallsensorvorrichtung zur Anordnung in einer Öffnung eines Verkleidungsteils des Kraftfahrzeugs ausgelegt ist, mit einem Ultraschallsensor zum Aussenden und/oder Empfangen eines Ultraschallsignals und mit einem Halteelement zu Halten des Ultraschallsensors. Die Erfindung betrifft außerdem eine Anordnung mit zumindest einer solchen Ultraschallsensorvorrichtung und einem Verkleidungsteil für das Kraftfahrzeug. Schließlich betrifft die vorliegende Erfindung ein Kraftfahrzeug mit einer solchen Anordnung.

Das Interesse richtet sich vorliegend auf Ultraschallsensorvorrichtungen für Kraftfahrzeuge. Derartige Ultraschallsensorvorrichtung bzw. Ultraschallsensoren können beispielsweise in Fahrerassistenzsystemen, wie beispielsweise Parksystemen oder ACC(Adaptive Cruise Control)-Systemen, verwendet werden. Derartige Fahrerassistenzsysteme umfassen üblicherweise mehrere Ultraschallsensoren, die am Kraftfahrzeug angeordnet sind, und mittels denen der Umgebungsbereich des Kraftfahrzeugs auf das Vorhandensein von Objekten überprüft werden kann, die für das weitere Fortbewegen des Kraftfahrzeugs im Weg sind.

Die Ultraschallsensoren umfassen üblicherweise eine Membran, die beispielsweise topfförmig ausgebildet sein kann. Die Membran kann mit einem entsprechenden Aktor, beispielsweise einem piezoelektrischen Element, zu mechanischen Schwingungen angeregt werden. Somit kann mit dem Ultraschallsensor ein Ultraschallsignal ausgesendet werden. Dieses ausgesendete Ultraschallsignal wird dann an Hindernissen beziehungsweise Objekten reflektiert und kann wieder von dem Ultraschallsensor empfangen werden, nämlich als Echo. Anhand des empfangenen Echos kann der Abstand zwischen dem Objekt und dem Kraftfahrzeug bestimmt werden. Der Abstand wird dabei in Abhängigkeit von der Laufzeit des Echos ermittelt, wobei hier eine Zeitdauer zwischen dem Sendezeitpunkt und dem Empfangszeitpunkt gemessen wird.

Die Ultraschallsensorvorrichtungen können bekannterweise im Frontbereich und/oder im Heckbereich des Kraftfahrzeugs in einem Verkleidungsteil, insbesondere einem Stoßfänger, verbaut sein. Dabei können die Ultraschallsensoren unverdeckt in einer entsprechenden Durchgangsöffnung des Verkleidungsteils angeordnet sein. Die Ultraschallsensorvorrichtung weist üblicherweise ein Halteelement zum Halten des Ultraschallsensors auf. Das Halteelement dient weiterhin dazu, den Ultraschallsensor in der Öffnung des Verkleidungsteils zu Positionieren. Diese Halteelemente werden beispielsweise mit einem doppelseitigen Klebeband an der Innenseite des Stoßfängers befestigt. Dieses Klebeband übernimmt die mechanische Fixierung des Ultraschallsensors und des Halteelements an dem Verkleidungsteil.

In diesem Zusammenhang beschreibt die DE 10 2010 049 818 A1 eine Anordnung mit einem Außenverkleidungselement, beispielsweise einem Stoßfänger, für ein Fahrzeug und mit zumindest einem Sensor. Der Sensor ist dabei hinter einer Wandung verdeckt positioniert. Zudem ist der über eine Haltevorrichtung so an die Wandung angepresst, dass er zumindest teilweise über einen Kraftschluss mit der Wandung in Position gehalten ist. Die Haltevorrichtung ist dabei über ein Klebepad auf der Innenwand des Außenverkleidungselements angebracht.

Ferner ist aus der DE 10 2012 106 692 A1 ein Verfahren zum Anbringen einer Ultraschallsensorvorrichtung an einer Rückseite eines Verkleidungsteils bekannt. Hierbei wird eine Frontseite der Ultraschallsensorvorrichtung mit der Rückseite des Verkleidungsteils verbunden. Zudem kann die Ultraschallsensorvorrichtung entsprechende Laschen aufweisen, die mittels eines Klebebands mit der Rückseite des Verkleidungsteils verbunden werden.

Die WO2014/016081 A1 beschreibt eine Ultraschallsensorvorrichtung mit einem Ultraschallsensor, der mittels eines Klebemittels an einem metallischen Teil angeordnet ist. Auf der Oberfläche des metallischen Teils um den Ultraschallsensor und das im Wesentlichen ringförmige Dämpfungsteil kann ein schallabsorbierendes und/oder schalldämpfendes Material aufgebracht sein, welches zum Unterdrücken der induzierten Störsignale dient. Vorzugsweise ist das schallabsorbierende und/oder schalldämpfende Material eine klebbare ein- oder mehrlagige Bitumenschicht. Nach einer weiteren Ausführung kann das schallabsorbierende und/oder schalldämpfende Material auch ein einspritzbares Material, beispielsweise ein Acrylat, ein Kautschuk oder ein Polyepoxid sein.

Es ist Aufgabe der vorliegenden Erfindung, eine Lösung aufzuzeigen, eine Ultraschallsensorvorrichtung für ein Kraftfahrzeug der eingangs genannten Art zuverlässiger betrieben werden kann.

Diese Aufgabe wird erfindungsgemäß durch eine Ultraschallsensorvorrichtung, durch eine Anordnung sowie durch ein Kraftfahrzeug mit den Merkmalen gemäß den jeweiligen unabhängigen Patentansprüchen gelöst. Vorteilhafte Weiterbildungen der vorliegenden Erfindung sind Gegenstand der abhängigen Patentansprüche, der Beschreibung und der Figuren.

Eine erfindungsgemäße Ultraschallsensorvorrichtung für ein Kraftfahrzeug ist zur Anordnung in einer Öffnung eines Verkleidungsteils des Kraftfahrzeugs ausgelegt. Die Ultraschallsensorvorrichtung umfasst einen Ultraschallsensor zum Aussenden und/oder Empfangen eines Ultraschallsignals und ein Halteelement zu Halten des Ultraschallsensors. Die Ultraschallsensorvorrichtung weist außerdem ein Dämpfungselement zum Dämpfen einer in Folge des Ultraschallsignals erzeugten Schwingung auf, welches zumindest bereichsweise an dem Halteelement angeordnet ist und welches zumindest teilsweise aus einem Butylkautschuk besteht.

Die Ultraschallsensorvorrichtung ist für den unverdeckten Einbau in dem Verkleidungsteil des Kraftfahrzeugs ausgebildet. Der Ultraschallsensor der Ultraschallsensorvorrichtung kann in einer entsprechenden Aussparung oder Durchgangsöffnung des Verkleidungsteils angeordnet werden. Der Ultraschallsensor ist also in bei bestimmungsgemäßem Einbau am Kraftfahrzeug von außen sichtbar. Der Ultraschallsensor umfasst beispielsweise eine Membran, welche topfförmig ausgebildet sein kann und aus Aluminium gefertigt sein kann. An der Membran beziehungsweise an dem Boden der Membran kann ein entsprechender Aktor, beispielsweise ein piezoelektrisches Element, angeordnet sein. Mittels des Aktors kann die Membran zu mechanischen Schwingungen angeregt werden. Auf diese Weise kann mit der Membran ein Ultraschallsignal ausgesendet werden. Das piezoelektrische Element dient insbesondere auch dazu, eine mechanische Schwingung der Membran zu erfassen. Somit kann das von einem Objekt reflektierte Ultraschallsignal, welches die Membran zu Schwingungen anregt. wieder mit dem Ultraschallsensor empfangen werden. Die Membran kann zumindest bereichsweise in einem Gehäuse des Ultraschallsensors angeordnet sein. In dem Gehäuse kann zudem eine Elektronik zum Ansteuern des piezoelektrischen Elements beziehungsweise zum Auslesen der von dem piezoelektrischen Element bereitgestellten Spannungssignale angeordnet sein.

Die Ultraschallsensorvorrichtung umfasst zudem ein Halteelement, welches zu Halten des Ultraschallsensors dient. Das Halteelement kann ferner dazu dienen, den Ultraschallsensor an dem Verkleidungsteil zu halten. Des Weitren umfasst die Ultraschallsensorvorrichtung ein Dämpfungselement, das zumindest teilweise aus einem Butylkautschuk gefertigt ist. Das Dämpfungselement kann insbesondere vollständig aus einem Butylkautschuk gefertigt sein. Dieser Butylkautschuk kann ein Copolymerisat von 95 bis 99 Mol-% Isobuten und 1 bis 5 Mol-% Isopropen sein. Mit dem Dämpfungselement kann eine Schwingung, die in Folge des Ultraschallsignals entsteht, gedämpft werden. Außerdem kann das Dämpfungselement dazu ausgelegt sein, Schall zu dämpfen und/oder zu absorbieren. Damit kann beispielsweise verhindert werden, dass im eingebauten Zustand der Ultraschallsensorvorrichtung eine Schwingung von dem Ultraschallsensor auf das Verkleidungsteil übertragen wird. Zudem kann unterbunden werden, dass sich Schwingungen des Verkleidungsteils auf den Ultraschallsensor übertragen. Auf diese Weise können Messfehler in Folge der Schwingungen vermieden werden und somit die Ultraschallsensorvorrichtung zuverlässiger betrieben werden.

Bevorzugt ist eine erste Seite und/oder eine der ersten Seite gegenüberliegende, zweite Seite des Dämpfungselements adhäsiv ausgebildet. Mit anderen Worten ist das Dämpfungselement klebend bzw. selbstklebend ausgebildet. Butylkautschuk zeichnet sich durch eine ausgeprägte Oberflächenklebrigkeit aus. Zudem weist das Material eine starke Anfangshaftung auf. Ferner weist das Material eine gute Haftung auf Metallen, lackierten Oberflächen, Holz und Kunststoff auf. Ein Dämpfungselement, das aus Butylkautschuk gefertigt ist, kann somit auf einfache Weise an dem Verkleidungsteil befestigt werden.

Weiterhin ist es vorteilhaft, wenn das Dämpfungselement an der ersten Seite mit dem Halteelement verbunden ist. Beispielsweise kann das Dämpfungselement mit dem Halteelement stoffschlüssig verbunden sein. Das Halteelement kann im Wesentlichen plattenförmig ausgebildet sein. Das Dämpfungselement kann zumindest bereichsweise auf dem Halteelement angeordnet sein. Da das Dämpfungselement bevorzugt selbstklebend ausgebildet ist, kann es auf einfache Weise mit dem Halteelement verbunden werden. Das Dämpfungselement kann somit nach Art eines Klebepads ausgebildet sein. Zudem kann das Dämpfungselement in der bestimmungsgemäßen Einbaulage dazu dienen, das Halteelement mit dem Verkleidungsteil zu verbinden.

In einer weiteren Ausführungsform umgibt das Dämpfungselement eine Membran des Ultraschallsensors zumindest bereichsweise. Insbesondere umgibt das Dämpfungselement die Membran vollständig. Somit können von der Membran erzeugte Schwingungen im Bereich des Dämpfungselements zuverlässig gedämpft werden. Zudem kann verhindert werden, dass Schwingungen oder Schall an die Membran übertragen wird. Auf diese Weisen kann verhindert werden, dass sogenannten Scheinechos mit dem Ultraschallsensor detektiert werden.

In einer Ausgestaltung umfasst die Ultraschallsensorvorrichtung ein Positionierungselement, welches in einem Zwischenraum zwischen der Membran und dem Dämpfungselement angeordnet ist. Das Positionierungselement kann beispielsweise durch einen Kunststoffring gebildet sein, welcher zum Beispiel trichterförmig ausgebildet sein kann. Das Positionierungselement kann die Membran umfangsseitig umgeben. Das Positionierungselement kann zur Positionierung der Membran bzw. des Ultraschallsensors in der Öffnung des Verkleidungsteils dienen.

Bevorzugt weist die Ultraschallsensorvorrichtung ein Befestigungselement zum Befestigen des Ultraschallsensors an dem Verkleidungsteil auf. Das Befestigungselement kann zusätzlich dazu dienen, die Ultraschallsensorvorrichtung an einer Rückseite bzw. Innenseite des Verkleidungsteils zu befestigen. Bei dieser Ausführungsform übernimmt das Dämpfungselement die mechanische Fixierung der Ultraschallsensorvorrichtung an dem Verkleidungsteil nicht vollständig. Das Befestigungselement kann beispielsweise entsprechende Haltebügel umfassen, die einerseits an dem Ultraschallsensor angeordnet sind und andererseits an dem Verkleidungsteil, beispielsweise mittels eines Klebstoffs, befestigt werden können.

Eine erfindungsgemäße Anordnung für ein Kraftfahrzeug umfasst zumindest eine erfindungsgemäße Ultraschallsensorvorrichtung und ein Verkleidungsteil für das Kraftfahrzeug, wobei die zumindest eine Ultraschallsensorvorrichtung zumindest bereichsweise in einer Öffnung des Verkleidungsteils angeordnet ist. Das Verkleidungsteil kann aus einem Kunststoff oder aus einem Metall gebildet sein. Das Verkleidungsteil kann beispielsweise ein Stoßfänger oder ein anderes Karosseriebauteil, wie beispielsweise eine Tür des Kraftfahrzeugs, sein. In dem Verkleidungsteil können beispielsweise mehrere Bohrungen vorgesehen sein, in welche die jeweiligen Ultraschallsensorvorrichtungen eingebracht werden können. In der bestimmungsgemäßen Einbaulage der Ultraschallsensorvorrichtungen in dem Kraftfahrzeug sind die Ultraschallsensoren bzw. deren Membran und gegebenenfalls deren Positionierungselement also von außen sichtbar. Durch das Dämpfungselement kann zuverlässig verhindert werden, dass Schwingungen von dem Ultraschallsensor auf das Verkleidungsteil und umgekehrt übertragen werden.

Bevorzugt ist das Dämpfungselement zwischen dem Halteelement und dem Verkleidungsteil angeordnet. Die Dämpfungseigenschaften können durch die Formgebung des Dämpfungselements bestimmt werden. Beispielsweise kann die geometrische Form und/oder die Schichtdicke des Dämpfungselements so bestimmt werden, dass die Schwingungen zuverlässig dämpft bzw. absorbiert werden. Hierzu können entsprechende Versuche und Berechnungen durchgeführt werden.

Insbesondere ist das Halteelement mittels des Dämpfungselements an dem Verkleidungsteil gehalten. Somit dient das Dämpfungselement zum einen als Klebepad zum Befestigen der Ultraschallsensorvorrichtung an dem Verkleidungsteil. Zu anderen dient das Dämpfungselement zur Dämpfung von Schwingungen und/oder als schallabsorbierendes bzw. schalldämpfendes Material.

Ein erfindungsgemäßes Kraftfahrzeug umfasst eine erfindungsgemäße Anordnung. Das Kraftfahrzeug ist insbesondere als Personenkraftwagen ausgebildet. Die Ultraschallsensorvorrichtung kann dabei Teil eines Fahrerassistenzsystems, beispielsweise eines Einparkassistenten, des Kraftfahrzeugs sein.

Die mit Bezug auf die erfindungsgemäße Ultraschallsensorvorrichtung vorgestellten bevorzugten Ausführungsformen und deren Vorteile gelten entsprechend für die erfindungsgemäße Anordnung und das erfindungsgemäße Kraftfahrzeug.

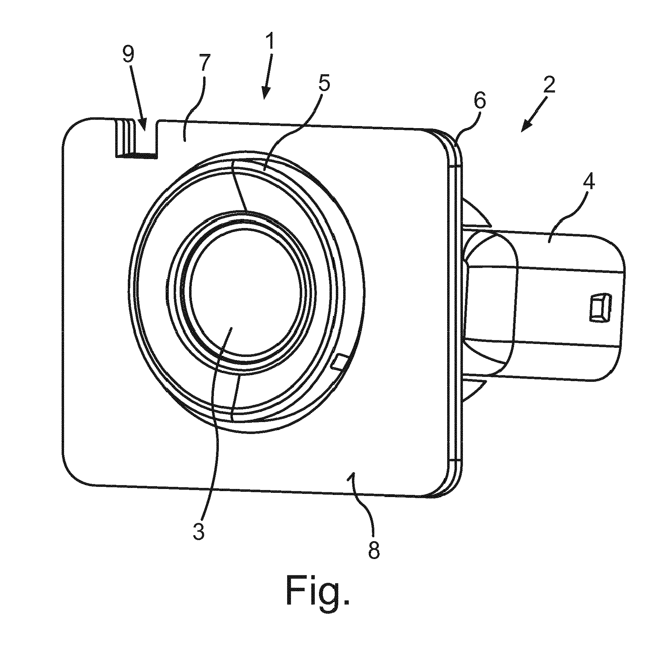

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Dabei zeigt die Figur eine Perspektivansicht einer Ultraschallsensorvorrichtung für ein Kraftfahrzeug gemäß einer Ausführungsform der vorliegenden Erfindung.

Die Figur zeigt eine Ultraschallsensorvorrichtung 1 für ein Kraftfahrzeug in einer Perspektivansicht. Eine solche Ultraschallsensorvorrichtung 1 kann beispielsweise Teil eines Fahrerassistenzsystems des Kraftfahrzeugs sein. Beispielsweise kann eine derartige Ultraschallsensorvorrichtung 1 Teil eines Parkassistenzsystems sein. Die Ultraschallsensorvorrichtung 1 ist dazu ausgelegt, in einer entsprechenden Durchgangsöffnung eines Verkleidungsteils, beispielsweise eines Stoßfängers, des Kraftfahrzeugs angeordnet zu werden. Die Ultraschallsensorvorrichtung 1 ist also in der bestimmungsgemäßen Einbaulage von außen sichtbar.

Die Ultraschallsensorvorrichtung 1 umfasst einen Ultraschallsensor 2. Der Ultraschallsensor 2 ist in einem Gehäuse 4 angeordnet und umfasst wiederum eine Membran 3. Die Membran 3 kann im Wesentlichen topfförmig ausgebildet sein und kann beispielsweise aus Aluminium gefertigt sein. Die Membran 3 weist einen Membranboden auf, dessen Vorderseite vorliegend zu sehen ist. An einer Rückseite des Membranbodens ist ein Aktor, der beispielsweise ein piezoelektrisches Element umfasst, mit einem entsprechenden Klebstoff befestigt. In einem Sendebetrieb des Ultraschallsensors 2 wird der Aktor mit einer elektrischen Spannung versorgt. Auf diese Weise kann die Membran 3 und insbesondere der Membranboden mittels des Aktors zu mechanischen Schwingungen angeregt werden. Die Schwingung führt dazu, dass die Membran 3 ein Ultraschallsignal aussendet. In einem anschließenden Empfangsbetrieb des Ultraschallsensors 2 ist der Aktor nicht mehr mit elektrischer Energie versorgt. In diesem Empfangsbetrieb kann das von einem Objekt reflektierte Ultraschallsignal, das auf die Membran 3 trifft, empfangen werden. Das reflektierte Ultraschallsignal bewirkt eine mechanische Schwingung der Membran 3. Diese kann mit dem Aktor beziehungsweise dem piezoelektrischen Element erfasst werden.

Die Ultraschallsensorvorrichtung 1 umfasst außerdem ein Halteelement 6. Das Halteelement 6 dient zum Halten des Ultraschallsensors 2. Das Halteelement 6 weist eine entsprechende Öffnung auf, in welcher die Membran 3 zumindest bereichsweise angeordnet ist. Ferner weist die Ultraschallsensorvorrichtung 1 ein Positionierungselement 5 auf, welches die Membran 3 umgibt. Die Membran 3 und das Positionierungselement 5 sind in der bestimmungsgemäßen Einbaulage in dem Verkleidungsteil von außen sichtbar. Das Positionierungselement 5 ist in dem vorliegenden Ausführungsbeispiel im Wesentlichen ringförmig bzw. trichterförmig ausgebildet. Beispielsweise kann das Positionierungselement 5 aus einem Kunststoff gefertigt sein. Das Positionierungselement 5 dient zur Positionierung der Ultraschallsensorvorrichtung 1 an dem Verkleidungsteil des Kraftfahrzeugs. Das Positionierungselement 5 kann in einer Durchgangsöffnung des Verkleidungsteils angeordnet werden.

Darüber hinaus weist die Ultraschallsensorvorrichtung 1 ein Dämpfungselement 7 auf. Das Dämpfungselement 7 ist zumindest teilweise aus einem Butylkautschuk gefertigt. Insbesondere ist das Dämpfungselement 7 vollständig aus Butylkautschuk gefertigt. Das Dämpfungselement 7 ist auf dem Halteelement 6 angeordnet. Zudem weist das Dämpfungselement 7 eine Öffnung auf, in welcher das Positionierungselement 5 und die Membran 3 angeordnet sind. Das Dämpfungselement 7 ist bevorzugt adhäsiv bzw. selbstklebend ausgebildet. Das Dämpfungselement 7 ist mit einer ersten Seite auf das Halteelement 6 geklebt. Eine zweite Seite 8 des Dämpfungselements 7 kann an die Innenseite, also eine von außen nicht sichtbare Seite, des Verkleidungsteils geklebt werden. Auf diese Weise kann die Ultraschallsensorvorrichtung auf einfache Weise an dem Verkleidungsteil befestigt werden. Hierbei kann es auch vorgesehen sein, dass ein zusätzliches Befestigungselement vorgesehen ist, welches zur Befestigung der Ultraschallsensorvorrichtung 1 an dem Verkleidungsteil dient.

Das Dämpfungselement 7 weist zudem schwingungsdämpfende Eigenschaften auf. Das Dämpfungselement 7 kann ferner schallabsorbierend und/oder schalldämpfend ausgebildet sein. Durch das Dämpfungselement 7 kann eine Übertragung der mechanischen Schwingungen der Membran 3 im Sendebetrieb des Ultraschallsensors 2 auf das Verkleidungsteil verhindert werden. Auf diese Weise kann vermieden werden, dass Schwingungen auf weitern in dem Verkleidungsteil angeordnete Ultraschallsensoren übertragen werden. Zudem dient das Dämpfungselement 7 dazu, eine Übertragung von Schwingungen des Verkleidungsteils auf den Ultraschallsensor 2 bzw. die Membran 3 zu reduzieren. Somit kann verhindert werden, dass die Schwingungen von dem Ultraschallsensor als sogenanntes Scheinecho erfasst werden.

In dem Bereich 9 weist das Halteelement 6 und das Dämpfungselement 7 eine Aussparung auf. Diese Aussparungen können zu einem korrespondierenden Vorsprung auf der Innenseite des Verkleidungsteils angeordnet werden. Damit kann die Ultraschallsensorvorrichtung 1 bei der Montage an dem Verkleidungsteil einfach positioniert werden.

## Patentansprüche

1. Ultraschallsensorvorrichtung (1) für ein Kraftfahrzeug, wobei die Ultraschallsensorvorrichtung (1) zur Anordnung in einer Öffnung eines Verkleidungsteils des Kraftfahrzeugs ausgelegt ist, mit einem Ultraschallsensor (2) zum Aussenden und/oder Empfangen eines Ultraschallsignals und mit einem Halteelement (6) zum Halten des Ultraschallsensors (2),
**dadurch gekennzeichnet, dass**
die Ultraschallsensorvorrichtung (1) ein Dämpfungselement (7) zum Dämpfen einer in Folge des Ultraschallsignals erzeugten Schwingung aufweist, welches zumindest bereichsweise an dem Halteelement (6) angeordnet ist und welches zumindest teilsweise aus einem Butylkautschuk besteht.

2. Ultraschallsensorvorrichtung nach Anspruch 1,
**dadurch gekennzeichnet, dass**
eine erste Seite und/oder eine der ersten Seite gegenüberliegende, zweite Seite (8) des Dämpfungselements (7) adhäsiv ausgebildet ist.

3. Ultraschallsensorvorrichtung nach Anspruch 2,
**dadurch gekennzeichnet, dass**
das Dämpfungselement (7) an der ersten Seite mit dem Halteelement (6) verbunden ist.

4. Ultraschallsensorvorrichtung nach einem der vorhergehenden Ansprüche,
**dadurch gekennzeichnet, dass**
das Dämpfungselement (7) eine Membran (3) des Ultraschallsensors (2) zumindest bereichsweise umgibt.

5. Ultraschallsensorvorrichtung nach einem der vorhergehenden Ansprüche,
**dadurch gekennzeichnet, dass**
die Ultraschallsensorvorrichtung (1) ein Positionierungselement (5) umfasst, welches in einem Zwischenraum zwischen einer Membran (3) des Ultraschallsensors (2) und dem Dämpfungselement (7) angeordnet ist.

6. Ultraschallsensorvorrichtung nach einem der vorhergehenden Ansprüche,
**dadurch gekennzeichnet, dass**
die Ultraschallsensorvorrichtung (1) ein Befestigungselement zum Befestigen des Ultraschallsensor (2) an dem Verkleidungsteil aufweist.

7. Anordnung für ein Kraftfahrzeug mit zumindest einer Ultraschallsensorvorrichtung (1) nach einem der vorhergehenden Ansprüche und mit einem Verkleidungsteil für das Kraftfahrzeug, wobei die zumindest eine Ultraschallsensorvorrichtung (1) zumindest bereichsweise in einer Öffnung des Verkleidungsteils angeordnet ist.

8. Anordnung nach Anspruch 7,
**dadurch gekennzeichnet, dass**
das Dämpfungselement (7) zwischen dem Halteelement (6) und dem Verkleidungsteil angeordnet ist.

9. Anordnung nach Anspruch 7 oder 8,
**dadurch gekennzeichnet, dass**
das Halteelement (6) mittels des Dämpfungselements (7) an dem Verkleidungsteil gehalten ist.

10. Kraftfahrzeug mit einer Anordnung nach einem der Ansprüche 7 bis 9.
